# EUROPEAN PATENT SPECIFICATION

(11) **EP 4 594 642 B1**
(45) Date of publication and mention of the grant of the patent: **28.10.2026**
(21) Application number: 23744354.4
(22) Date of filing: 21.06.2023
(51) Int. Cl.: F04C 2/10, F03C 2/08

(54) **PLANETARY HYDRAULIC MOTOR**
HYDRAULISCHER PLANETENMOTOR
MOTEUR HYDRAULIQUE PLANÉTAIRE

(30) Priority: 21.10.2022 BG 11360322
(43) Date of publication of application: 06.08.2025
(73) Proprietor: "M + S Hydraulic" Plc., 6100 Kazanlak (BG)
(72) Inventor: HRISTOV, Daniel Petrov, 6100 Kazanlak, Stara Zagora (BG)
(74) Representative: Tahtadjiev, Konstantin
(86) International application number: PCT/BG2023/050005
(87) International publication number: WO 2024/082032

(56) References cited:
- EP-A1- 3 073 133
- BG-U1- 1 919
- US-A1- 2005 088 041
- US-A1- 2011 048 224
- US-B1- 8 109 747
- XP093400905
- UNKNOWN: "Internal Company Standard - Quality management System - Planetary hydraulic motors, type MMR", 1 June 2022 (2022-06-01), XP093400916
- UNKNOWN: "Test Procedure - Quality management System - Planetary hydraulic motors, type MMR - Testing", 1 June 2022 (2022-06-01), XP093400910

## Description

### TECHNICAL FIELD

The invention refers to an orbital hydraulic motor, finding application in the drive systems of a diverse range of machines and equipment, utilized in various industry fields such as machine-building, construction, agriculture, transport and others.

### PRIOR ART

The orbital hydraulic motors convert hydraulic energy (manifested in the form of pressure and oil flow) into mechanical energy (manifested in the form of torque and revolutions). The hydraulic motors operate on the principle of the internal gear transmission (rotor, in particular), which rotates within a fixed external gear transmission (rollers and stator, in particular). The internal gear transmission transmits the torque and revolutions, generated by the flow and pressure of the hydraulic oil, fed to the hydraulic motor. The hydraulic oil is subsequently transferred to the motor's output shaft. The orbital hydraulic motors are characterized by high starting torque and constant torque rates in a wide speed range. There are two types of working fluid distribution: axial (disc type) and radial (spool type), carried out between the housing and the distributor shaft. Furthermore, there are two types of orbital gear wheel set: gerotor type, characterized by the contact, carried out between the rotor and the stator, and geroller type, characterized by the contact, carried out between the rotor, the roller and the stator.

Utility model document, BG 1919 U1 discloses a model of an orbital hydraulic motor, equipped with a geroller gear wheel set. The model in question comprises a housing and a gear wheel set. The housing's design features ports "A" and "B" (serving as inlet and outlet ports for the hydraulic oil) and a distributor shaft, equipped with distributing grooves. The gear wheel set, for its part, consists of stator, rotor and roller, with various-capacity working chambers, positioned in-between the aforementioned three components. The rotor is characterized by external teeth and axis which is offset relative to the stator's axis by a fixed distance "e" ("e" standing for "eccentricity"). A cardan shaft is positioned between the distributor shaft and the rotor. A flange is mounted to the front section of the housing. A distributor plate (featuring ports) is installed between the housing's rear section and the stator. The design is completed by an end cover, positioned externally, relative to the gear wheel set.

Patent document EP3073133 A1, which is comprised in the prior art discloses, output shaft (1) of a cycloid hydraulic motor and an axle valve flow-distribution cycloid hydraulic motor having same, belonging to the technical field of mechanical transmission. The main body of the output shaft includes a larger-diameter section (1-2) assembled in a casing (10) of the cycloid hydraulic motor and a smaller-diameter section (1-1) extending out of the casing. An engaging structure transmissibly connected with a linkage shaft (21) of the cycloid hydraulic motor is disposed in an inner hole of the larger-diameter section (1-2), and a dynamic engaging portion (1-2-1) is disposed on an external surface of the larger-diameter section for dynamically engaging with the casing (10), the dynamic engaging portion (1-2-1) includes at least two circumferential intermittent oil grooves (1-2-2); a groove bottom of each intermittent oil groove is formed by an eccentric arc about the center O' that deviates from the center O of an excircle of the dynamic engaging portion by a process eccentricity e, the radius R of the eccentric arc is greater than the radius r of the excircle of the dynamic engaging portion. The output shaft and the cycloid hydraulic motor can improve the working efficiency and reduce the manufacture cost, and can form a better oil film, enhance the radial bearing capacity, and ensure the lubrication and seal.

The gear wheel set from the existing prior art models as mentioned above includes a rotor with six teeth, positioned externally, on the outer duct. In addition, it consists of seven rollers with seven in-between working chambers and distributor shaft, equipped with twelve distributing grooves. The large number of teeth (on the rotor), rollers and distributing grooves, characteristic for the aforementioned disclosure, predetermine its big overall dimensions and, respectively, its difficult assembly.

Patent document US2005088041A1, which is also comprised in the prior art discloses, a housing for a motor having fluid passages integrated within. The passages include a first passage for receiving a fluid from outside the motor, a second passage for directing the fluid away from the motor, and at least one other passage from conveying the fluid to a set of components attached to the motor housing. The housing has at least one relief valve positioned within the fluid passages for diverting a portion of the fluid directly from the first passage to the second passage. It also discloses valves equipped with washer, spring and support screw.

Patent document US2011048224A1, which is also comprised in the prior art discloses, a hydraulic pump or motor including a housing having an end cover and a port plate. The cardan shaft is mounted in the housing and extends through the port plate. A rotation speed sensor is fixed to the port plate and includes a sensor probe obtaining its signal from the orbiting cardan shaft. A piston may be in contact with the cardan shaft and moving forward and back due to the orbital motion of the cardan shaft. The sensor probe then obtains its signal from the movement of the piston.

Patent document US8109747B1, which is also comprised in the prior art discloses, a variable output assembly including a hydraulic pump disposed on a pump running surface located on a center section, end cap or other hydraulic mounting member. The pump may be a gerotor or other rotatable pump body. A support member is disposed between the pump running surface and the pump and includes a pump support surface having openings to permit fluid communication between the support member and the pump running surface. A motor assembly may be hydraulically connected to the pump running surface by a first porting system, and a sump is hydraulically connected to the pump running surface by a second porting system. The support member is movable between neutral and a plurality of positions corresponding to forward and reverse directions of the output. In forward and reverse positions, the support member permits fluid communication between the pump and the motor through the support surface openings and the first porting system, and in the neutral position the support member permits fluid communication between the pump and the sump through the support surface openings and the second porting system.

### SUMMARY OF THE INVENTION

The principle aim of the project, involving the invention, is the development of an orbital hydraulic motor with compact, easy-to-assemble design that guarantees longer lifecycle of the gear wheel set and ensures low noise and vibration levels during operation in comparison to the one as disclosed in BG 1919 U1.

The developed orbital hydraulic motor consists of a housing and a gear wheel set. The housing features ports A and B being the inlet and outlet ports for the hydraulic oil,and a distributor shaft, equipped with distributing grooves. The gear wheel set, in its turn, consists of stator, rotor and roller, with various-capacity working chambers, positioned in-between the aforementioned three components. The rotor is characterized by external teeth and axis which is offset relative to the stator's axis by a fixed distance representing eccentricity € . A cardan shaft is positioned between the distributor shaft and the rotor. A flange is mounted to the front section of the housing. A distributor plate (featuring ports) is installed between the housing's rear section and the stator. The design is completed by an end cover, positioned externally, relative to the gear wheel set. In accordance with the invention, the distributor shaft features a total of eight distributing grooves, the rotor includes four teeth, positioned externally on the outer duct. In addition, the invention foresees five rollers and five working chambers of the gear wheel.

The optional version of the orbital hydraulic motor might be offered with slots on the distributor shaft and a special mounting port, designed for speed sensor assembly on the housing.

The disclosure of the orbital hydraulic motor might incorporate a check valve, installed in port A and port B of the housing. In addition, the housing might feature at least one crossover relief valve, equipped with a washer, spring and support screw. The complete crossover relief valve package can be installed in a minimum of one mounting seat, within the housing's interior section.

Preferably, the housing should include two crossover relief valves, each of them installed in a mounting seat and equipped with a washer, spring and support screw.

The final version of the orbital hydraulic motor, developed with adherence to the invention, is characterized by a compact and easy-to-assemble design. Due to the small number of rollers, the frictional force between the rotor and rollers is significantly reduced, which, in turn, contributes to lower noise levels during operation. Furthermore, the low eccentricity between the axis of the rotor and the axis of the stator guarantees lower vibration levels.

Benefiting from the pressure-relief properties of their crossover relief valves, the optional versions of the orbital hydraulic motor, developed with adherence to the invention, can successfully cope up with cases in which the pressure of the working fluid exceeds the specified levels.

### BRIEF DESCRIPTION OF THE DRAWINGS

The technical features of the orbital hydraulic motor, object of the invention, are laid out further in the document, making reference to the respective drawings, namely:
Figure1 - general, axonometric view of the orbital hydraulic motor, in accordance with the invention;
Figure 2 - cross-sectional view of the orbital hydraulic motor, in accordance with the sample version of the invention, indicating the flow direction of the working fluid;
Figure 3 - three-dimensional layout of the workpieces, constituting the orbital hydrauli c motor, presented in Figure 2. The layout also includes three additional workpieces, featured in the design of the second sample version of the invention, presented in Figure4;
Figure 4 - cross-sectional view of the orbital hydraulic motor, in accordance with the second sample version of the invention;
Figure 5 - three-dimensional layout, displaying the housing of the orbital hydraulic motor, presented in Figure.4, including the additional assembly workpieces, in accordance with the disclosure of the second sample version of the invention;
Figure 6 - drawing view of the orbital hydraulic motor's gear wheel set, designed in accordance with the invention.

**TECHNICAL FEATURES OF THE INVENTION**

| | | | |
|---|---|---|---|
| 1. | Screws | 18. | Gear Wheel Set |
| 2. | Flange | 18.1. | Stator |
| 3. | Screws for the front cover | 18.2. | Roller |
| 4. | Washers for the end cover | 18.3. | Rotor |
| 5. | Dust cleaner | 18.4. | Working chambers |
| 6. | Front cover | 19. | End cover |
| 7. | Seal | 20. | Washers for the end cover |
| 8. | O-ring | 21. | Screws for the end cover |
| 9. | Bearing washer | 22. | O-ring for the end cover |
| 10. | Bearing | 23. | Plug for the end cover |
| 11. | Key | 24. | Rivets |
| 12. | Distributor shaft | 25. | Nameplate |
| 12.1. | slots | 26. | Port plug |
| 13. | Housing | 27. | Check valves |
| 13.1. | Mounting port for speed sensor assembly | 28. | Mounting seat |
| 14. | Cardan shaft | 29. | Crossover relief valve |
| 15. | Intermediate O-ring | 30. | Washer |
| 16. | Distributor plate | 31. | Spring |
| 17. | Distributor plate with relief groove | 32. | Support screw |
| | | 33. | Plug |

### DESCRIPTION OF PREFERRED EMBODIMENTS

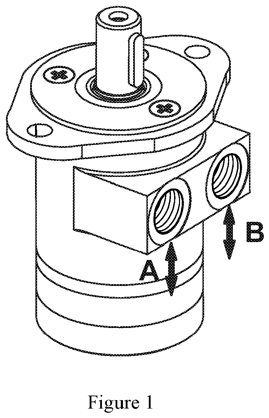

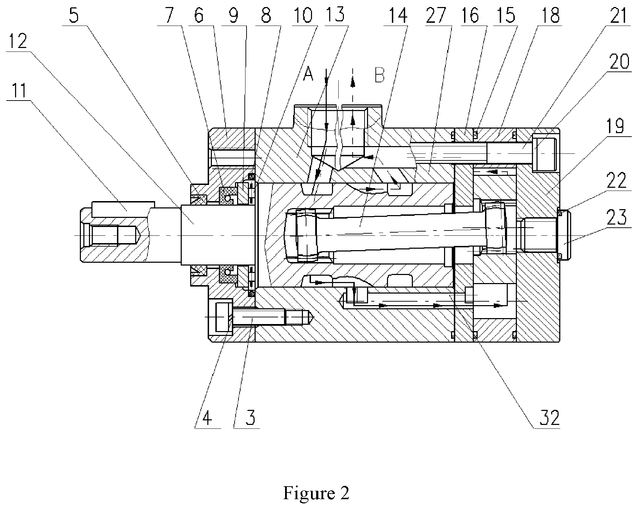

Figures 1, 2, 3 and 6 show a sample version of an orbital hydraulic motor, in accordance with the invention. As shown in Figure 1, 2 and 3, the orbital hydraulic motor comprises a housing (13) that features ports "A" and "B" (serving as inlet and outlet ports for the hydraulic oil) and five distributing grooves. A distributor shaft (12), featuring eight distributing grooves, is installed within the housing (13). A front cover (6) is mounted to the front section of the housing (13) by means of screws (3) and washers (4). A flange (2) is mounted to the front cover (6) by means of screws (1). A sealing set, consisting of a dust seal (5), a seal (7) and an O-ring (8), is installed within the front cover (6). A bearing unit, comprising a bearing (10) and a bearing washer (9), is positioned between the distributor shaft (12) and the front cover (6). A key (11) is mounted to the front section of the distributor shaft (12). A distributor plate (16), a gear wheel set (18) and an end cover (19) are consequently mounted to the rear section of housing (13) by means of screws (21) and washers (20). The invention incorporates three intermediate O-rings (15), installed, respectively, between the housing (13) and the distributor plate (16), between the distributor plate (16) and the gear wheel set (18) and between the gear wheel set (18) and the end cover (19). The end cover (19) is equipped with an O-ring (22) and a plug (23).

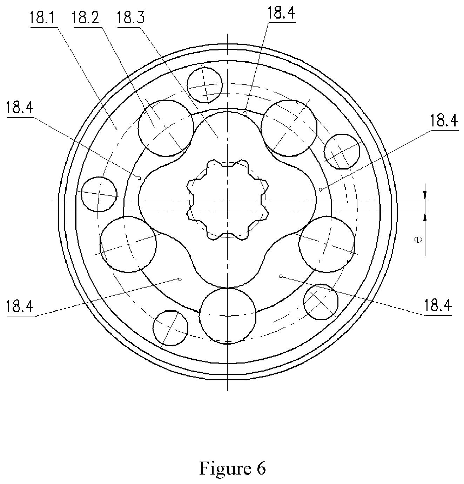

As shown in Figure 6, the gear wheel set (18) consists of a stator (18.1), a rotor (18.3) and five pieces of rollers (18.2), positioned in a manner that allows the formation of in-between working chambers with variable capacity (18.4). The shape of the rotor (18.3) resembles an equidistant curve, forming a closed contour, featuring four external teeth. Furthermore, the axis of the rotor (18.3) is offset relative to the axis of the stator (18.1) by a fixed distance "e" ("e" standing for "eccentricity") thus forming two working chambers with low pressure, two working chambers with high pressure and one working chamber with zero (neutral) pressure. The recommended eccentricity value is 2.2 mm, whereas the recommended roller diameter is 10 mm. The working chambers (18.4) and their height determine the various geometric capacity of the gear wheel set (18). A cardan shaft (14) is positioned between the distributor shaft (12) and the rotor (18.3).

Figures 1, 3, 4, 5 and 6 show a second sample version of an orbital hydraulic motor, in accordance with the invention.

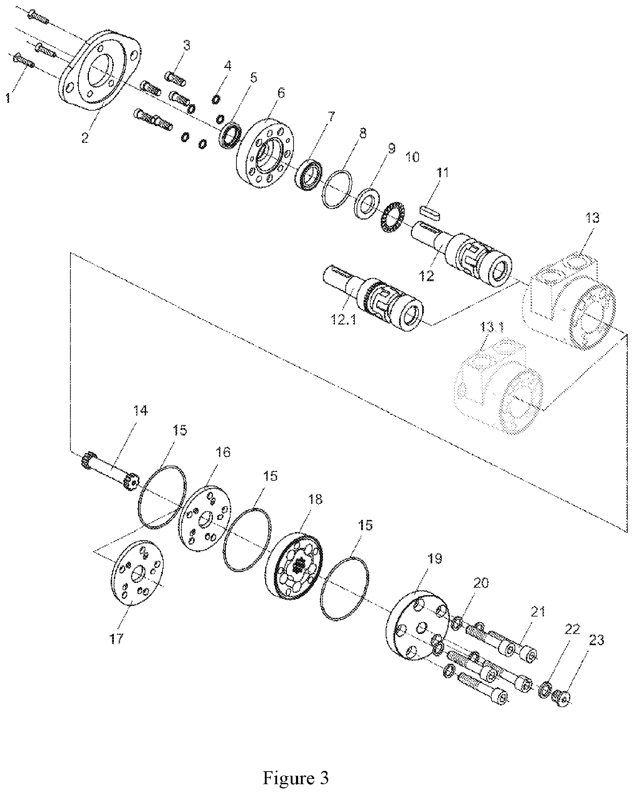

The second sample version of the orbital hydraulic motor features a housing (13), equipped with ports "A" and "B" (serving as inlet and outlet ports for the hydraulic oil) and five distributing grooves. A distributor shaft (12), featuring eight distributing grooves, is assembled within the housing (13). As indicated in Figure 3, the distributor shaft (12) incorporates slots (12.1), whereas the housing (13) features a special mounting port (13.1), designed for speed sensor assembly. A front cover (6) is mounted to the front section of the housing (13) by means of screws (3) and washers (4). A flange (2) is mounted to the front cover (6) by means of screws (1). A sealing set, consisting of a dust seal (5), a seal (7) and an O-ring (8), is installed within the front cover (6). A bearing unit, comprising a bearing (10) and a bearing washer (9), is positioned between the distributor shaft (12) and the front cover (6). A key (11) is mounted to the front section of the distributor shaft (12).

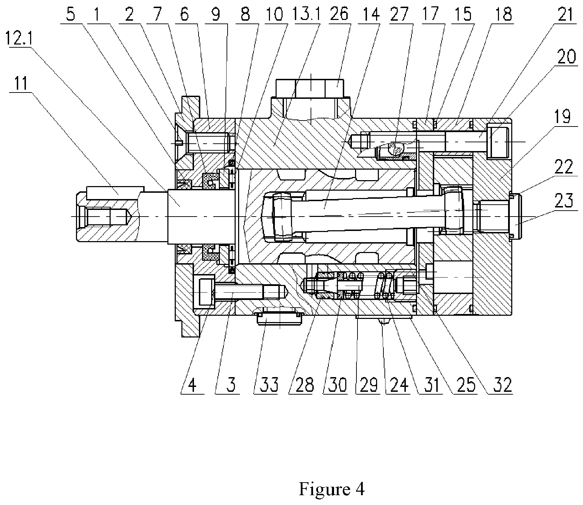

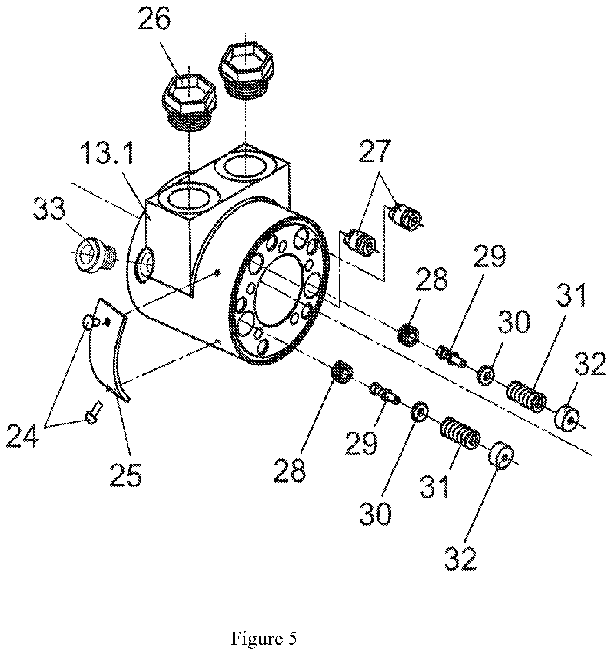

As shown in Figure 4 and Figure 5, the invention of the second sample version incorporates a check valve (27), installed in port "A" and port "B", respectively. The internal section of the housing (13), on the other hand, encloses two crossover relief valves (29). Each of the crossover relief valves (29) is equipped with washer (30), spring (31) and support screw (32) and installed in a special mounting seat (28). There are a total of two check valves (27), each of them connected to either port "A" or port "B", thus enabling the in-feed of the working fluid. Ports "A" and "B" are closed by means of two plugs (26). The housing (13) features an additional plug (33) that shuts the mounting port for the speed sensor (13.1). A nameplate (25) is installed on the housing (13) by means of mounting rivets (24).

A distributor plate with relief groove (17), a gear wheel set (18) and an end cover (19) are consequently mounted to the rear section of the housing (13) by means of screws (21) and washers (20). The disclosure incorporates three intermediate O-rings (15), installed, respectively, between the housing (13) and the distributor plate with relief groove (17), between the distributor plate with relief groove (17) and the gear wheel set (18) and between the gear wheel set (18) and the end cover (19). The end cover (19) is equipped with an O-ring (22) and a plug (23).

The gear wheel set (18) from the second sample version of orbital hydraulic motor is identical to its counterpart from the first sample version.

### INDUSTRIAL APPLICABILITY OF THE INVENTION

The orbital hydraulic motor, featuring a gear wheel set (18), developed with adherence to the invention, functions in the following manner:
First, the working fluid with a specified flow rate is fed through either port "A" or port "B", positioned within the housing (13). Then, it enters the high-pressure area of the distributor shaft (12). The hydraulic fluid is subsequently transferred to half of the eight distributing grooves of the distributor shaft (12) thus entering the distributing grooves of the housing (13). From there, through the distributing grooves of the distributor plate (16), or the distributor plate with relief groove (17), depending on the respective sample version of orbital hydraulic motor, the working fluid enters the working chambers (18.4) of the gear wheel set (18). The pressure of the working fluid produces the force that drives the rotor (18.3) and the stator (18.1) by following the internal engaging trajectory formed between the aforementioned gear wheel components. The rotor (18.3) is rotated around the eccentric axis (the recommended eccentricity value is 2,2 mm). The rotational motion triggers the rotation of the teeth in the internal area of the rotor (18.3), in a direction, opposite to the direction in which the rotor rotates around the stator (18.1), with gear ratio of ¼, i.e. four times slower. The motion is then transmitted to the cardan shaft (14) and subsequently transferred to the gear wheel distributor shaft (12). After the gear wheel set's (18) working chamber (18.4) is filled with oil, it enters in a neutral position and connects to port "B" in reverse order (provided that the fluid was fed through port "A"). Conversely, if the working fluid has entered through port "B", the working chamber connects to port "A" (after filling up with oil and entering a neutral position). The orbital hydraulic motor is a reverse type, meaning that by the time the distributor shaft (12) makes one revolution, the rotor (18.3) has already rotated four times around the center of the stator (18.1). The rotational motion of the distributor shaft (12) causes the distributing grooves and shaped holes to connect with different working chambers (18.4) of the gear wheel set or with the distributing grooves, located within the housing (13), thus making them constantly change their function. In this case the working chambers (18.4) within the rotor (18.3) are: 2 pcs. of high-pressure working chambers, 2 pcs. of low-pressure working chambers and 1 pc. of neutral-pressure working chamber. This particular design characteristic allows the complete fill-up of all 20 working chambers (4x5) by the time the distributor shaft (12) has made one full rotation (360°). The height of the gear wheel set (18) determines the geometric capacity (i.e. displacement type) of the orbital hydraulic motor (from 8 cm³ to 50 cm³). The geometric capacity represents the fluid amount that has passed through all of the working chambers (18.4) by the time the distributor shaft (12) has completed one full rotation.

When the invention incorporates an speed sensor (not shown in the figures), the plug (33) has to be removed from the housing (13), after which the sensor has to be assembled by means of the specially designed mounting port (13.1). The speed sensor counts the slots (12.1) in the distributor shaft (12) and processes the analogue signal to digital format by means of a reading device.

In case the invention incorporates crossover relief valves and check valves and the flow rate pressure is higher than specified, the latter is decreased in the following manner:
If the pressure, formed in one of the feeding ports of the housing (13), is higher than specified, it acts upon the crossover relief valve (29), positioned within the seat (28). The crossover relief valve (29), in turn, pushes the washer (30) and compresses the spring (31) thus allowing the residue flow to consequently pass through the support screw (32) and the relief groove of the distributor plate (17), relieving the system from the accumulated high pressure through one of its check valves (27).

## Claims

1. **Orbital hydraulic motor** comprising a housing (13), equipped with inlet/outlet ports (A) and (B), a distributor shaft (12), that includes distributing grooves, and a gear wheel set (18), that features stator (18.1), rotor (18.3) and rollers (18.2), positioned in a manner that allows the formation of variable-capacity working chambers (18.4) in-between them, wherein a cardan shaft (14) is positioned between the rotor (18.3) and the distributor shaft (12) , wherein the rotor (18.3) incorporates external teeth and its axis is offset relative to the axis of the stator (18.1) by a fixed distance representing eccentricity (e) and, furthermore, a flange (2) and a front cover (6) is mounted to the front section of the housing (13), a distributor plate (16), equipped with ports, is installed between the stator (18.1) and the rear section of the housing (13), and an end cover (19) is mounted externally, relative to the gear wheel set (18), **characterized in that** the distributing grooves in the distributor shaft (12) are eight in number, the teeth on the outer contour of the rotor (18.3) are four, and the rollers (18.2) and working chambers (18.4) of the gear wheel set (18) are five in number.

2. Orbital hydraulic motorin accordance with Patent Claim 1, **characterized in that** the housing (13) includes a mounting port (13.1) designed for speed sensor assembly and the distributor shaft (12) is provided with slots (12.1) for assisting the speed sensor assembly in measuring the rotational motion of the distributor shaft (12).

3. Orbital hydraulic motor in accordance with Patent Claim 1 or Patent Claim 2, **characterized in that** in each inlet/outlet port ("A" and "B") of the housing (13) a check valve (27) is installed, and at least one crossover relief valve (29), equipped with washer (30), spring(31) and support screw(32) is installed in at least one mounting seat (28) located within the housing (13).

4. Orbital hydraulic motor in accordance with Patent Claim 3, **characterized in that** the installed within the housing (13) crossover relief valves (29) are two in number, , each of which is installed in installed in the mounting seats (28), equipped with washer (30), spring(31) and support screw(32.

## Patentansprüche

1. Orbitalhydraulikmotor der ein mit Einlass-/Auslassanschlüssen (A) und (B) ausgestattetes Gehäuse (13), eine Verteilerwelle (12) die Verteilernuten aufweist und ein Zahnradsatz (18) der aus Stator (18.1), Rotor (18.3) und Rollen (18.2) bestehet, umfasst, die so angeordnet sind, dass zwischen ihnen Arbeitskammern (18.4) mit variablem Volumen gebildet werden können, indem zwischen dem Rotor (18.3) und der Verteilerwelle (12) eine Kardanwelle (14) sich befindet, indem der Rotor (18.3) Außenverzahnungen aufweist, und seine Achse gegenüber der Achse des Stators (18.1) um einen festen Abstand, der die Exzentrizität (e) darstellt, versetzt ist, und weiterhin am vorderen Teil des Gehäuses (13) ein Flansch (2) und eine Frontabdeckung (6) angebracht sind, und zwischen Stator (18.1) und dem hinteren Teil des Gehäuses (13) eine mit Durchlässen versehene Verteilerplatte (16) installiert ist, und ein Enddeckel (19) außen, relativ zum Zahnradsatz (18), angebracht ist, **dadurch gekennzeichnet, dass** die Verteilernuten in der Verteilerwelle (12) in einer Anzahl von acht vorhanden sind, die Zähne an der Außenkontur des Rotors (18.3) in einer Anzahl von vier vorhanden sind, und die Rollen (18.2) und die Arbeitskammern (18.4) des Zahnradsatzes (18) in einer Anzahl von fünf vorhanden sind.

2. Orbitalhydraulikmotor nach Patentanspruch 1, **dadurch gekennzeichnet, dass** das Gehäuse (13) eine für die Montage einer Drehzahlsensorseinheit ausgelegte Montageöffnung (13.1) aufweist und die Verteilerwelle (12) mit Schlitzen (12.1) versehen ist, um die Drehzahlsensoranordnung bei der Messung der Drehbewegung der Verteilerwelle (12) zu unterstützen.

3. Orbitalhydraulikmotor nach Patentanspruch 1 oder Patentanspruch 2, **dadurch gekennzeichnet, dass** in jedem Einlass-/Auslassanschluss ("A" und "B") des Gehäuses (13) ein Rückschlagventil (27) eingebaut ist und mindestens ein mit Unterlegscheibe (30), Feder (31) und Stützschraube (32*)* Halteschraube (32), ausgestattete Überkreuz-Überdruckventil (29), in mindestens einem im Gehäuse (13) angeordneten Montagesitz (28) eingebaut ist.

4. Orbitalhydraulikmotor nach Patentanspruch 3, **dadurch gekennzeichnet, dass** es sich bei den im Gehäuse (13) eingebauten ÜberkreuzÜberdruckventilen (29) um zwei Ventile handelt, die jeweils in Montagesitz (28) angeordnet und mit einer Unterlegscheibe (30), einer Feder (31) sowie einer Stützschraube (32) ausgestattet sind.

## Revendications

1. Moteur hydraulique orbital comprenant un boîtier (13) muni d'orifices d'entrée/sortie (A) et (B), un arbre de distribution (12) comportant des rainures de distribution et un jeu de roues dentées (18) constitué d'un stator (18.1), d'un rotor (18.3) et de disques (18.2), positionnés de manière à former des chambres de travail (18.4) de capacité variable. Un arbre de transmission (14) est positionné entre le rotor (18.3) et l'arbre de distribution (12). Le rotor (18.3) est doté d'une denture extérieure et son axe est décalé par rapport à l'axe du stator (18.1) d'une distance fixe représentant l'excentricité (e), et en outre une bride (2) et un couvercle avant (6) sont fixés à la partie avant du boîtier (13), une plaque de distribution (16) munie d'orifices est installée entre le stator (18.1) et la partie arrière du boîtier (13), et un couvercle d'extrémité (19) est monté à l'extérieur, par rapport à l'ensemble de roues dentées (18), **caractérisé en ce que** les rainures de distribution dans l'arbre de distribution (12) sont au nombre de huit, les dents sur le contour extérieur du rotor (18.3) sont au nombre de quatre, et les disques (18.2) et les chambres de travail (18.4) de l'ensemble de roues dentées (18) sont au nombre de cinq.

2. Moteur hydraulique orbital selon la Revendication 1 du brevet, **caractérisé en ce que** le boîtier (13) comprend un logement de montage (13.1) conçu pour l'assemblage du capteur de vitesse et que l'arbre de distribution (12) est muni de fentes (12.1) pour aider l'assemblage du capteur de vitesse à mesurer le mouvement de rotation de l'arbre de distribution (12).

3. Moteur hydraulique orbital selon la Revendication 1 ou la Revendication 2 du brevet, **caractérisé en ce que** dans chaque orifice d'entrée/sortie ("A" et "B") du boîtier (13) est installé un clapet anti-retour (27), et au moins une soupape de décharge de croisement (29), équipée d'une rondelle (30), d'un ressort (31) et d'une vis de support (32), est installée dans au moins un siège de montage (28) situé à l'intérieur du boîtier (13).

4. Moteur hydraulique orbital selon la Revendication 3 du brevet, **caractérisé en ce que** les soupapes de décharge de croisement (29) installées dans le boîtier (13) sont au nombre de deux, chacune étant installée dans les sièges de montage (28), équipés d'une rondelle (30), d'un ressort (31) et d'une vis de support (32).
